# EUROPEAN PATENT APPLICATION

(11) **EP 4 533 941 A1**
(43) Date of publication of application: **09.04.2025**
(21) Application number: 23815716.8
(22) Date of filing: 11.05.2023
(51) Int. Cl.: A01G 9/18, A01G 7/00, A01G 7/02, A01G 9/24

(54) **CARBON DIOXIDE SUPPLY DEVICE AND METHOD**

(30) Priority: 30.05.2022 JP 2022087300; 10.04.2023 JP 2023063461
(71) Applicant: Kabushikigaisya Seibu-Giken, Koga-City, Fukuoka 811-3134 (JP)
(72) Inventor: YOSHIDA, Kazuyuki, Koga-City, Fukuoka 8113134 (JP); INOUE, Koji, Koga-City, Fukuoka 8113134 (JP); ASAI, Yuichiro, Tsu-City, Mie 5142221 (JP)
(74) Representative: TBK
(86) International application number: PCT/JP2023/017672
(87) International publication number: WO 2023/233956

(57) **Abstract**

A carbon dioxide supply device is provided in a horticultural facility such as a plastic greenhouse or a plant factory, air in the facility is circulated by the carbon dioxide supply device, and a total heat exchanger that totally exchanges heat between the circulated air and outdoor air is provided so that an environment in the facility can be adjusted to optimum temperature and humidity for plants.

## Description

### BACKGROUND OF THE INVENTION

### FIELD OF THE INVENTION

The present invention relates to a carbon dioxide supply device and a carbon dioxide supply method employing a thermal swing method using a total heat exchanger that concentrates carbon dioxide in the atmosphere and supplies the concentrated carbon dioxide to a plant house or a greenhouse for plants to promote the growth of plants.

### BACKGROUND ART

Since a facility for producing crops (hereinafter, referred to as a "horticultural facility"), such as a plant factory or a crop cultivation house for tomatoes or strawberries, is under a closed environment, carbon dioxide concentration in an indoor space of the facility is gradually reduced as the photosynthesis of the plants is performed. Therefore, research in which raw gas of carbon dioxide or the like is locally applied near leaves using a tube or a duct to increase the yield of large fruit and the yield of commercial fruit has been performed.

There is a carbon dioxide supply device that supplies carbon dioxide contained in combustion exhaust gas obtained from the combustion of kerosene or the like, as a carbon dioxide supply device that supplies carbon dioxide to a horticultural facility such as a plastic greenhouse or a plant factory. However, this device has disadvantages that nitrogen oxides and sulfur oxides contained in exhaust gas need to be set to concentration equal to or lower than concentration that does not affect the growth of plants, and temperature in the facility rises. As a solution, a carbon dioxide cylinder may be used. However, since the price of the carbon dioxide cylinder is high and carbon dioxide generated at a power plant or the like is used after being recovered and liquefied, there is a problem that carbon dioxide in the atmosphere is increased and global warming is promoted as in the former case.

Therefore, a method of separating, recovering, and concentrating carbon dioxide in the atmosphere using a honeycomb rotor to supply the carbon dioxide to plants as in JP-A-2019-62862 has been developed. A method in which a duct for applying carbon dioxide is installed near leaves of plants to locally apply carbon dioxide has been studied in this method. However, since the installation of the duct is cumbersome, a method of more easily applying carbon dioxide and further increasing carbon dioxide concentration around leaves has been required by a user. Therefore, in a case where a horticultural facility is sealed so that outdoor air does not enter the horticultural facility, the entire carbon dioxide concentration in the facility can be increased even though a duct for locally applying carbon dioxide is not provided. However, in this case, temperature and humidity in the facility rise due to direct sunlight. In general, outdoor air is taken in to lower temperature and humidity and make an appropriate cultivation environment. However, in a case where outdoor air is taken in, there is a problem that carbon dioxide concentration does not increase.

In order to improve a cultivation environment in a horticultural facility, a method of taking in outdoor air and exchanging heat between the outdoor air and air in the facility is generally used in the related art such as JP-A-2021-122248, JP-A-2016-121841, JP-A-2015-87026, and JP-A-2011-160754. In a case where temperature or humidity is desired to be lowered more actively, cooling is performed using a heat pump or the like. However, since temperature in the facility easily reaches 30°C or higher (hereinafter, all temperatures are referred to as "Celsius temperature") due to direct sunlight, a large amount of energy is required for cooling using a heat pump or the like. Further, there is also a problem that power consumption for humidity is also increased since a large amount of moisture needs to be removed due to transpiration from plants.

Furthermore, in JP-A-2022-50159, air in a cultivation room in a plant factory is sucked, is caused to pass through a heat exchanger, is cooled and dehumidified, and is then blown into the cultivation room again. This method also has a problem that power consumption required for cooling is increased as the cultivation room is increased in size.

### SUMMARY OF THE INVENTION

In the method of separating, recovering, and concentrating carbon dioxide in the atmosphere using the honeycomb rotor to supply the carbon dioxide to plants as in JP-A-2019-62862, the concentration of carbon dioxide discharged from the device is higher than the carbon dioxide concentration of taken-in air by about 300 to 400 ppm. Since the carbon dioxide concentration of outdoor air is about 400 ppm, a duct for locally applying carbon dioxide is installed around leaves of plants and gas having a carbon dioxide concentration of 700 to 800 ppm is blown but carbon dioxide concentration around the leaves is about 500 ppm. The reason for this is considered as follows. In a case where temperature in the facility rises due to direct sunlight, a ceiling, a side door, side windows, or the like of the facility is opened and outdoor air is caused to enter the facility to lower temperature in the facility. Accordingly, carbon dioxide concentration does not increase. An increase in the yield of an agricultural product has been confirmed even in a current test, but it has been confirmed that a photosynthesis rate is proportionally increased, that is, the yield is increased up to a carbon dioxide concentration of about 800 ppm.

Further, in the case of strawberries or the like, it takes a lot of time and effort to install ducts for locally applying carbon dioxide of which a row has a length of about 30 to 50 m around leaves. For this reason, it is desired to eliminate the ducts for locally applying carbon dioxide.

In order to solve these problems, it is desired to apply carbon dioxide in a state in which the ceiling and the side surface of the facility are not open. However, in this case, temperature and humidity in the facility rise. For example, in a case where a plastic greenhouse is closed, temperature in the greenhouse immediately rises to 30°C or higher due to direct sunlight. Further, humidity also rises due to transpiration from plants. In an environment where temperature is high and humidity is high, plants may wither or may be affected by pests, diseases, or mold. In a case where cooling and dehumidification are performed by a cooling method or the like in order to adjust temperature and humidity, a huge amount of power is consumed. Actually, according to agricultural workers, in a case where cooling is performed using a heat pump since temperature in a greenhouse significantly rises during daytime, the required cooling capacity of the heat pump is too large. For this reason, agricultural workers said that cooling using a heat pump could not be introduced. Therefore, since a method of opening the ceiling or the side surface of the greenhouse and introducing outdoor air is most cost-effective, this method is employed currently to lower temperature and humidity. Furthermore, it is said that in a case where there is a gentle breeze, fresh air is delivered to the stomata of leaves of plants and the growth of the plants is promoted. In a case where the plastic greenhouse is closed and there is no flow of air, the growth of the plant is hindered.

The present invention has been made in order to solve the above-described problems, and provides a carbon dioxide supply device and a carbon dioxide supply method that can set optimum temperature and humidity for plants in a horticultural facility using a total heat exchanger without the installation of a duct for locally applying carbon dioxide.

A carbon dioxide supply device according to an aspect of the present invention adjusts temperature and humidity in a horticultural facility using a total heat exchanger, does not need to open a ceiling or a side surface of the facility, and can apply carbon dioxide without the installation of a duct for locally applying carbon dioxide.

Since the carbon dioxide supply device according to the aspect of the present invention takes in outdoor air as little as possible, carbon dioxide concentration in the horticultural facility can be increased up to about the concentration of carbon dioxide supplied by the device. Further, the carbon dioxide supply device can increase the carbon dioxide concentration in the taken-in air by 300 to 400 ppm. Accordingly, in a case where carbon dioxide concentration of 400 ppm, which is the same as that of outdoor air, is taken in, the carbon dioxide supply device can supply carbon dioxide at a concentration of 700 to 800 ppm at the maximum. However, since air of which carbon dioxide concentration in the sealed horticultural facility is higher than that of outdoor air is taken in and gas is supplied into the horticultural facility again, the concentration of carbon dioxide to be supplied can be increased. As a result, it is possible to set carbon dioxide concentration to about 1,000 ppm at which the photosynthesis of the plant is most promoted.

Furthermore, since the indoor space of the horticultural facility or the like is sealed, it is not necessary to locally apply carbon dioxide near leaves. Accordingly, it is not necessary to install a duct or the like for locally applying carbon dioxide to plants.

In addition, since a window, a motor, and the like for opening a ceiling or a side surface of the plastic greenhouse are not required, the initial cost of the plastic greenhouse is suppressed. Since the window can be removed, the influence of wind and rain can be completely blocked. Moreover, since pests do not enter the plastic greenhouse from the outside, it is possible to reduce the use of agricultural chemicals. As a result, it is possible to realize environmentally friendly agriculture such as organic agriculture.

In addition, since temperature and humidity in the horticultural facility can be adjusted using the total heat exchanger, power consumption is only the power consumption of a fan of the total heat exchanger and a motor for rotating the rotor. Accordingly, the energy saving is significantly achieved as compared to cooling or the like using a heat pump. The carbon dioxide supply device according to the embodiment of the present invention takes in air of which the carbon dioxide concentration in the facility has increased, and desorbs and supplies carbon dioxide. Since there is no carbon dioxide leaking to outdoor air, it is sufficient to supply carbon dioxide of which the amount is the same as the amount of carbon dioxide absorbed by plants. Accordingly, energy used to desorb carbon dioxide is minimized, so that energy-saving operation can be performed.

In addition, since there is no flow of air in a case where the plastic greenhouse is sealed, fresh air is not sent even though the stomata of the leaves are open. However, since the flow of air can be generated in the plastic greenhouse by the total heat exchanger, the photosynthesis of the leaves can be promoted. Further, since there is the flow of air, temperature, humidity, and carbon dioxide concentration in the plastic greenhouse can also be made uniform.

### BRIEF DESCRIPTION OF THE DRAWINGS

Fig. 1 is a diagram showing Example 1 of a carbon dioxide supply device according to an embodiment of the present invention.
Fig. 2 is a diagram showing Example 2 of the carbon dioxide supply device according to the embodiment of the present invention.
Figs. 3A and 3B are diagrams showing Example 3 of the carbon dioxide supply device according to the embodiment of the present invention.
Fig. 4 is a diagram showing Example 4 of the carbon dioxide supply device according to the embodiment of the present invention.
Figs. 5A and 5B are graphs showing transitions in temperature and humidity in a plastic greenhouse in a case where the present invention is carried out.
Fig. 6 is a graph showing a transition in carbon dioxide concentration in the plastic greenhouse in a case where the present invention is carried out and in a current state.
Fig. 7 is a graph showing transitions in temperature and humidity in the plastic greenhouse in a case where a total heat exchanger is stopped or operated in the carbon dioxide supply device according to the embodiment of the present invention.
Fig. 8 is a graph showing a transition in carbon dioxide concentration in a plastic greenhouse in a case where the total heat exchanger is stopped or operated in the carbon dioxide supply device according to the embodiment of the present invention.

### DETAILED DESCRIPTION OF THE INVENTION

In the present invention, a carbon dioxide supply device is provided in a horticultural facility such as a plastic greenhouse or a plant factory, air in the facility is circulated by the carbon dioxide supply device, and a total heat exchanger that totally exchanges heat between the circulated air and outdoor air is provided so that an environment in the facility can be adjusted to optimum temperature and humidity for plants.

### Example 1

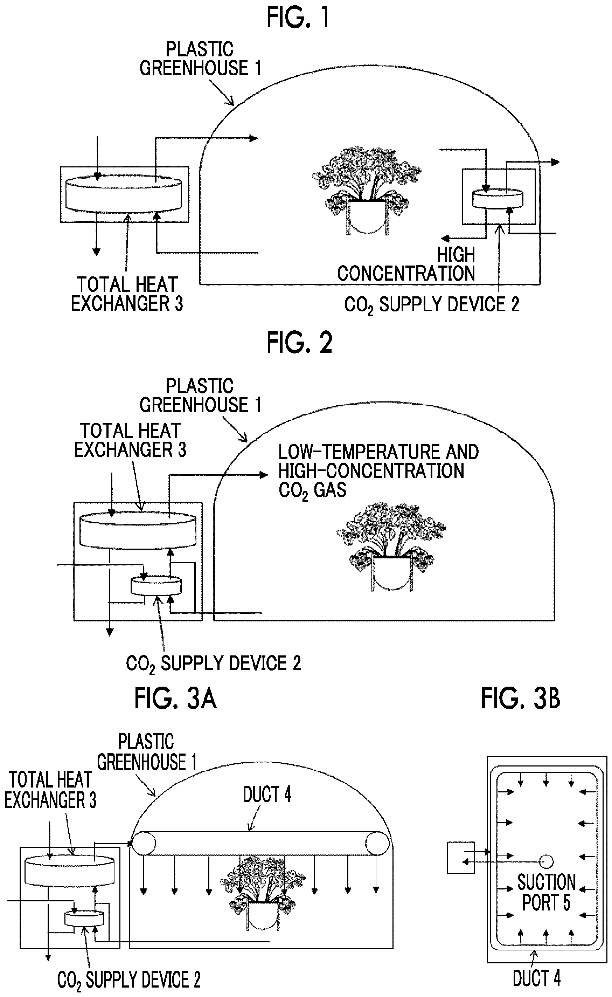

Fig. 1 is a diagram showing Example 1 of a carbon dioxide supply device according to an embodiment of the present invention. In the present example, a horticultural facility for cultivating strawberries or the like in a plastic greenhouse will be described. Reference numeral 2 denotes a carbon dioxide supply device including a carbon dioxide adsorption rotor, and the carbon dioxide supply device is installed inside a plastic greenhouse 1. A non-flammable sheet, such as glass fiber or ceramic fiber paper, is corrugated and wound in a rotor shape, so that the carbon dioxide adsorption rotor is obtained. A carbon dioxide adsorbent, such as a weakly basic ion-exchange resin or an amine-supported solid adsorbent, is supported on the carbon dioxide adsorption rotor. Further, the carbon dioxide adsorption rotor includes an adsorption zone that allows at least outdoor air to pass in a rotation direction of the rotor to adsorb carbon dioxide contained in the outdoor air and discharges the carbon dioxide to the outside of the device, and a desorption zone that allows air in the plastic greenhouse 1 heated by a regeneration heater (not shown) or the like to pass to desorb the carbon dioxide adsorbed in the adsorption zone and returns the desorbed carbon dioxide into the plastic greenhouse 1. As a result, carbon dioxide in the plastic greenhouse 1 can be concentrated, and high-concentration carbon dioxide can be supplied. The carbon dioxide adsorption rotor may be adapted to include a zone different from the adsorption zone and the desorption zone, such as a purge zone or a pre-purge zone, as in JP-A-2019-62862.

High-concentration carbon dioxide is circulated and supplied into the sealed plastic greenhouse 1 by the carbon dioxide supply device 2. A part of the air circulated in the plastic greenhouse 1 is sent to a total heat exchanger 3, is subjected to total heat exchange with outdoor air, and is then returned into the plastic greenhouse 1 again. Accordingly, the temperature and humidity of the air in the plastic greenhouse 1 in which temperature and humidity have been increased are lowered. The total heat exchanger 3 includes a total heat exchange rotor, and an aluminum sheet is formed in a honeycomb shape, a moisture adsorbent is supported on the sheet, and the sheet is finally formed in the shape of a rotatable rotor, so that the total heat exchange rotor is obtained. Examples of the moisture adsorbent include calcium chloride, diatomite, silica gel, zeolite, an ion-exchange resin, a polymeric sorbent, and the like. The total heat exchange rotor has an outdoor air ventilation zone that allows outdoor air to pass in the rotation direction of the rotor and discharges the outdoor air to the outside of the device, and an indoor air ventilation zone that allows air in the plastic greenhouse 1 to pass and returns the air into the plastic greenhouse 1 again. Although the total heat exchanger 3 including the total heat exchange rotor is used in the present example, the present invention is not limited thereto and other total heat exchangers such as a stationary cross-flow total heat exchanger may be used. Further, a stationary indirect evaporative cooler disclosed in JP-A-1998-311691A may be used to lower temperature. After the total heat exchanger is used, the total heat exchanger may be combined with a heat pump unit or an evaporative cooler.

Although the carbon dioxide supply device 2 is installed inside the plastic greenhouse 1 and the total heat exchanger 3 is installed outside the plastic greenhouse 1 in Example 1, the present invention is not limited thereto and both of the carbon dioxide supply device 2 and the total heat exchanger 3 may be adapted to be installed inside or outside the plastic greenhouse 1. Further, the carbon dioxide supply device 2 and the total heat exchanger 3 may be adapted to be installed between the inside and the outside of the plastic greenhouse 1 such that the adsorption zone of the carbon dioxide supply device 2 is installed outside the plastic greenhouse 1, the desorption zone thereof is installed inside the plastic greenhouse 1, the outdoor air ventilation zone of the total heat exchanger 3 is installed outside the plastic greenhouse 1, and the indoor air ventilation zone thereof is installed inside the plastic greenhouse 1. In this case, a duct that connects the carbon dioxide supply device 2 and the total heat exchanger 3 to the plastic greenhouse 1 can be removed. Further, although one carbon dioxide supply device 2 and one total heat exchanger 3 are installed, the present invention is not limited thereto and either one or both of the carbon dioxide supply device 2 and the total heat exchanger 3 may be adapted to be installed in a plurality of numbers. For example, in a case where the plastic greenhouse is large, a case where a rise in temperature or an increase in humidity in the plastic greenhouse is large, or the like, the diameter of a rotor or the like is to be increased in order to adjust temperature and humidity with one device. For this reason, a device also needs to be increased in size. However, in a case where a plurality of devices are used, the devices can be reduced in size while having redundancy. This is effective in a case where there is a problem with an installation space for the devices, and the like.

Although a carbon dioxide supply device including a carbon dioxide adsorption rotor is used as the carbon dioxide supply device 2, other carbon dioxide supply devices, which supply carbon dioxide contained in a carbon dioxide cylinder or in combustion exhaust gas obtained from the combustion of kerosene, or the like, and a total heat exchanger may be adapted to be combined with each other. As a result, the present invention can be carried out as long as a total heat exchanger is just installed in a horticultural facility where a carbon dioxide supply device has already been installed.

### Example 2

Fig. 2 is a diagram showing Example 2 of the carbon dioxide supply device according to the embodiment of the present invention. Since the configuration of the device in Example 2 is substantially the same as that in Example 1, repeated description will be omitted. An integrated device (unit) in which the carbon dioxide supply device 2 and the total heat exchanger 3 are combined with each other is used in Example 2 shown in Fig. 2.

In the case of Example 2, high-concentration carbon dioxide to be supplied into the sealed plastic greenhouse 1 can be supplied at a relatively low temperature.

In a case where the total heat exchange rotor provided in the total heat exchanger 3 is replaced with two-stage rotors, that is, a sensible heat exchange rotor and a dehumidification rotor and the rotation speeds of the rotors can be separately controlled (heat exchange efficiency and the dehumidification amount can be controlled), the state of temperature and humidity in the plastic greenhouse 1 can be monitored and the temperature and the humidity can also be more precisely controlled.

### Example 3

Fig. 3A is a diagram showing Example 3 of the carbon dioxide supply device according to the embodiment of the present invention as viewed from a side surface, and Fig. 3B is a diagram showing Example 3 of the carbon dioxide supply device according to the embodiment of the present invention as viewed from above. Since the configuration of the device even in Example 3 is substantially the same as that in Example 2, repeated description will be omitted. A duct 4 for blowing low-temperature and high-concentration carbon dioxide gas supplied from an integrated device (unit), in which the carbon dioxide supply device 2 and the total heat exchanger 3 are combined with each other, into the plastic greenhouse 1 is provided in Example 3 shown in Figs. 3A and 3B.

In the case of Example 3, the low-temperature and high-concentration carbon dioxide gas is blown from the duct 4 disposed around the plastic greenhouse 1 toward a side surface (toward the lower side of the duct) and an inside (toward a center of the plastic greenhouse) and is sucked from a suction port 5 provided near the center of the plastic greenhouse 1, so that the temperature, humidity, and carbon dioxide concentration in particularly only a plant cultivation area in the plastic greenhouse 1 can be adjusted. Since the airtightness of the plastic greenhouse is generally not so good, an air curtain is formed on the side surface and the upper surface by the flow of air to reduce an air adjustment space, so that energy is saved. Air is blown from the duct 4 toward the side surface and the inside in Example 3, but air may be blown from one of the side surface and the inside. Further, the present invention is not limited to the integrated device (unit) in which the carbon dioxide supply device 2 and the total heat exchanger 3 are combined with each other, and the carbon dioxide supply device 2 or the total heat exchanger 3 of Example 1 may be connected to the duct 4, and air having passed through the desorption zone or the indoor air ventilation zone may be blown into the plastic greenhouse 1 in the same manner.

### Example 4

A configuration in which a duct for locally applying carbon dioxide to plants is not installed is adopted in Examples 1 to 3. However, in a case where the length of the plastic greenhouse is long, for example, 60 m, unevenness is likely to occur in the distribution of temperature, humidity, or carbon dioxide concentration in the greenhouse. Therefore, in order to maintain each portion in the greenhouse in a uniform environmental state, as disclosed in JP-A-2011-101630, a flexible duct made of a plastic sheet is disposed along a greenhouse floor surface portion directly below a high bed for strawberries, and air is blown upward from air-blowing holes opened in the flexible duct. However, this method has problems that a sufficient space cannot be ensured for the installation of the duct in an existing greenhouse in which plants are cultivated and additional high installation cost is required. Further, in a case where a plastic duct (the flexible duct made of a plastic sheet) is installed, a fan having large power should be installed to inflate the plastic duct.

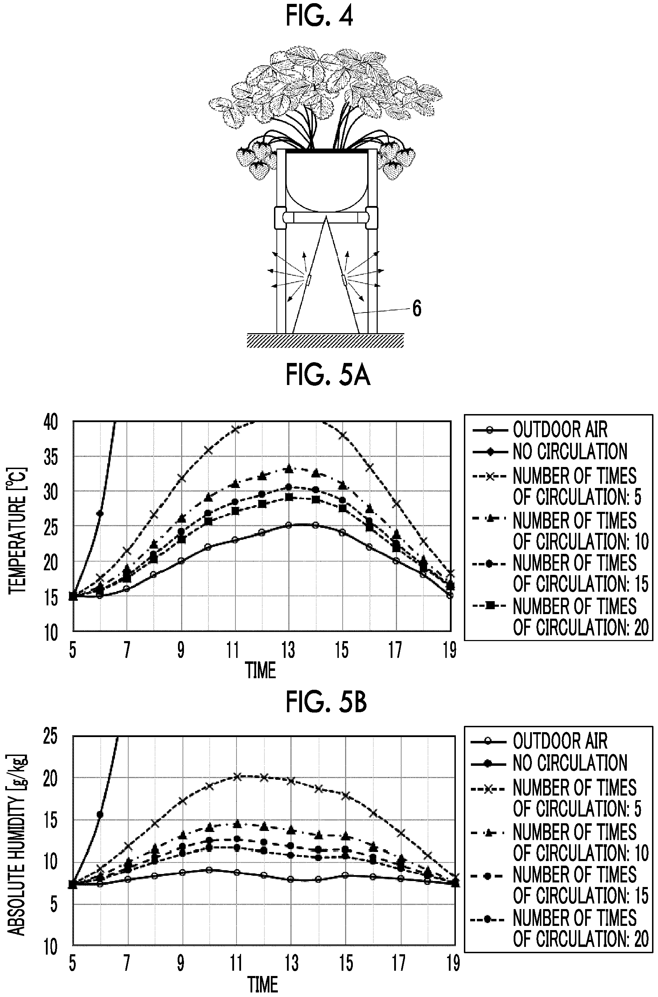

Therefore, in Example 4, as shown in Fig. 4, the plastic sheet 6 is stretched in a triangular shape like a tent using a space under a cultivation lane (high bed) for plants and air supplied from the carbon dioxide supply device 2 or the total heat exchanger 3 is blown into the plastic sheet 6. As a result, it is possible to make temperature and humidity in the greenhouse uniform with a low cost and low blowing power. A commercially available plastic sheet is used as the plastic sheet, and the plastic sheet is provided to be stretched from the bottom of the cultivation lane up to a floor surface and is fixed to the floor surface by screwing to form a space into which air supplied from the carbon dioxide supply device 2 or the total heat exchanger 3 is to be blown. In a case where holes are formed at regular intervals in a longitudinal direction of the sheet 6 on the side surfaces of the sheet 6 stretched in a triangular shape, supply air is blown out from the holes, so that the uniformization of temperature and humidity in the greenhouse can be promoted. One end of the sheet 6 stretched in a triangular shape is open or closed, and the other end thereof is connected to a duct or the like that supplies supply air into the indoor space from the carbon dioxide supply device 2 and/or the total heat exchanger **3.** The sheet is not limited to the plastic sheet, and other sheets may be used as long as the sheets have the same function as the plastic sheet. Since piping work is easy as compared to a plastic duct in a case where the sheet stretched in a triangular shape is used, cost is lower than that in the case of the plastic duct. It is possible to easily confirm that air is normally supplied to each portion through the visual observation of an inflated state of the plastic sheet. In addition, there is also a horticultural facility in which a plastic sheet has already been installed up to a floor surface under a cultivation lane in the case of a certain plant. In this case, a space surrounded by the plastic sheet may be used to blow air. Therefore, the shape of the plastic sheet is not limited to a triangular shape, and may be other shapes such as a quadrangular shape as long as the sheet can be stretched from the bottom of the cultivation lane up to the floor surface to form a space.

Fig. 5A shows a transition in a temperature change in the plastic greenhouse of the embodiment of the present invention at each time. In a case where air does not circulate without using the total heat exchanger in a state where the plastic greenhouse is sealed, temperature in the plastic greenhouse rapidly rises. In a case where the number of times of circulation (the number of times of replacement of air in the plastic greenhouse through the circulation of air per hour) is increased to increase the flow rate of the air circulating through the total heat exchanger, temperature in the plastic greenhouse is lowered. Since it is necessary to set temperature in the plastic greenhouse to 30°C or lower for the cultivation of plants, it can be said that the number of times of circulation of air is required to be 20 times or more. Fig. 5B shows a transition in humidity in the plastic greenhouse at each time. In a case where air does not circulate without using the total heat exchanger in a state where the plastic greenhouse is sealed, humidity rapidly rises like temperature. The reason for this is that the plants are watered and humidity increases due to the transpiration of water from the plants. It can be seen that an increase in humidity can be suppressed as the number of times of circulation is increased.

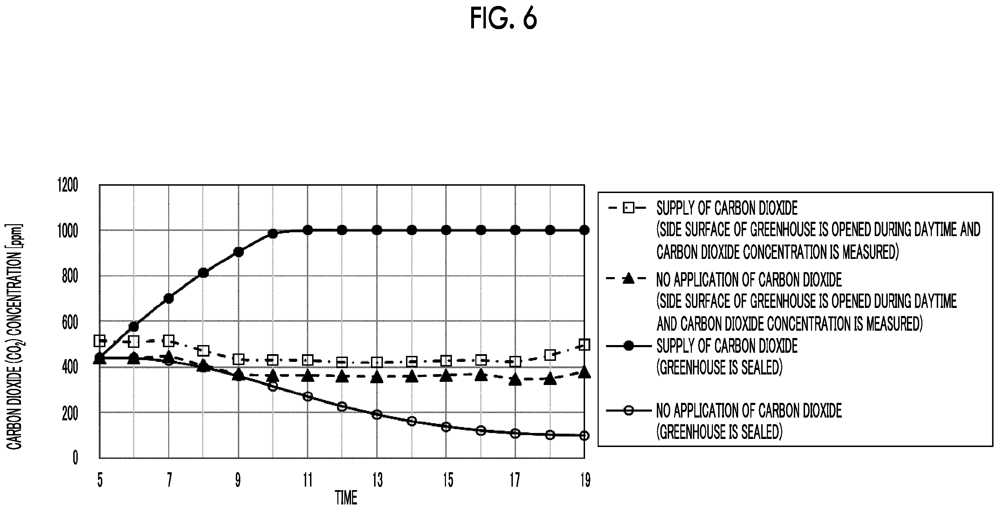

Fig. 6 shows a change in carbon dioxide concentration in the plastic greenhouse. The number of times of circulation in the carbon dioxide supply device in a case where the present invention is carried out is set to 0.45 times. Currently, the side surface of the plastic greenhouse is opened during the daytime to take in outdoor air, so that temperature and humidity are lowered. In a case where outdoor air is taken in but carbon dioxide is not applied (no application of carbon dioxide), carbon dioxide concentration measured around leaves is 400 ppm or less. In a case where a pipe is locally installed near leaves and carbon dioxide is supplied by a carbon dioxide supply device, the measured value of carbon dioxide concentration was increased by about 100 ppm as compared to a case of no application of carbon dioxide. However, since outdoor air is taken in, carbon dioxide concentration is not increased any more even in a case where the flow rate of air supplied from the carbon dioxide supply device is increased. In a case where temperature and humidity are adjusted by the total heat exchanger in a state where the greenhouse is sealed, the measured value of carbon dioxide concentration in the case of no application of carbon dioxide is reduced since carbon dioxide is used in the photosynthesis of plants. On the other hand, in a case where carbon dioxide is supplied using the carbon dioxide supply device in the present invention, carbon dioxide concentration can be controlled to 1,000 ppm.

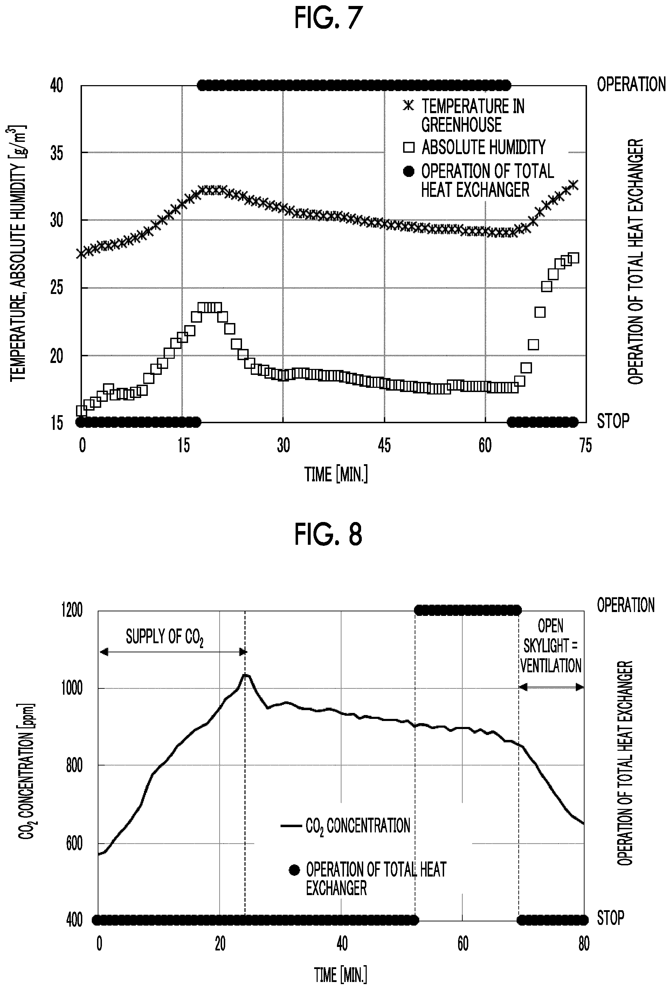

Fig. 7 shows measurement results of temperature and humidity in the plastic greenhouse in a case where the total heat exchanger is stopped or operated. It can be seen that temperature and humidity in the greenhouse rise when the total heat exchanger is stopped (0 to 17 minutes and 65 to 73 minutes). It can be confirmed that temperature and humidity in the greenhouse can be lowered and maintained when the total heat exchanger is operated (18 to 64 minutes) .

Fig. 8 shows measurement results of a change in carbon dioxide concentration in the plastic greenhouse during the operation of the total heat exchanger. In a case where carbon dioxide is supplied into the plastic greenhouse from the carbon dioxide supply device (0 to 25 minutes), carbon dioxide concentration is increased. After that, in a case where the supply of carbon dioxide is stopped, carbon dioxide concentration is gently reduced due to the photosynthesis of plants. In this case, it can be seen that a reduction in the carbon dioxide concentration is the same as that in a case where the greenhouse is closed even though the total heat exchanger is operated (52 to 69 minutes). Further, in a case where a skylight is opened and ventilation is performed (after 70 minutes), carbon dioxide concentration is rapidly reduced. From this, it could be confirmed that outdoor air did not enter the plastic greenhouse during the operation of the total heat exchanger, and it could be confirmed that carbon dioxide concentration in the plastic greenhouse could be maintained at a high concentration while temperature and humidity were lowered by the present invention and appropriate cultivation conditions were maintained.

Since the carbon dioxide supply device according to the embodiment of the present invention can supply air having carbon dioxide concentration suitable for growing plants with appropriate temperature and humidity, the carbon dioxide supply device can be applied to horticultural facilities such as a plant factory and a plastic greenhouse. Further, in a case of an indoor space isolated from outdoor air, the carbon dioxide supply device according to the embodiment of the present invention can be applied to other applications other than the horticultural facilities by being used as a supply device for other gases such as oxygen or nitrogen.

## Claims

1. A carbon dioxide supply device that supplies carbon dioxide into an indoor space, the carbon dioxide supply device comprising:
a total heat exchanger that totally exchanges heat between circulating indoor air in the indoor space and outdoor air and returns the indoor air into the indoor space.

2. The carbon dioxide supply device according to claim 1,
wherein the carbon dioxide supply device supplies carbon dioxide using the indoor air in the indoor space.

3. The carbon dioxide supply device according to claim 2,
wherein the indoor space is an indoor space of a horticultural facility.

4. The carbon dioxide supply device according to claim 2,
wherein the carbon dioxide supply device and the total heat exchanger are provided as an integrated unit.

5. The carbon dioxide supply device according to any one of claims 2 to 4,
wherein carbon dioxide is supplied from a duct disposed around the indoor space toward a side surface or an inside of the indoor space or both of the side surface and the inside, and the indoor air is sucked into the carbon dioxide supply device from the indoor space.

6. The carbon dioxide supply device according to any one of claims 1 to 4,
wherein a sheet is stretched up to a floor surface from a bottom of a cultivation lane for a plant in the indoor space to form a space, and air from the carbon dioxide supply device and/or the total heat exchanger is blown into the space to be supplied to the indoor space.

7. A horticultural facility comprising:
a carbon dioxide supply device; and
a total heat exchanger that totally exchanges heat between indoor air in the horticultural facility and outdoor air and returns the indoor air into an indoor space of the horticultural facility.

8. A carbon dioxide supply method of supplying carbon dioxide using indoor air in an indoor space, the carbon dioxide supply method comprising:
a total heat exchanger that totally exchanges heat between the circulating indoor air in the indoor space and outdoor air and returns the indoor air into the indoor space.
